# EUROPEAN PATENT SPECIFICATION

(11) **EP 3 239 207 B1**
(45) Date of publication and mention of the grant of the patent: **28.07.2021**
(21) Application number: 16167234.0
(22) Date of filing: 27.04.2016
(51) Int. Cl.: C08G 59/54, C08G 59/72

(54) **CURABLE EPOXY COMPOSITIONS**
HÄRTBARE EPOXIDZUSAMMENSETZUNGEN
COMPOSITIONS ÉPOXY DURCISSABLES

(43) Date of publication of application: 01.11.2017
(73) Proprietor: 3M Innovative Properties Company, Saint Paul, MN 55133-3427 (US)
(72) Inventor: Muth, Mathis Andreas, 45134 Essen (DE)
(74) Representative: Müller, Bruno

(56) References cited:
- EP-A1- 2 495 271
- EP-A1- 2 818 490
- EP-A1- 2 818 492
- EP-A2- 0 257 435
- EP-A2- 0 488 949
- GB-A- 990 603
- US-A- 2 450 940
- US-A- 2 695 908
- US-A- 2 909 494
- US-A- 4 775 734

## Description

### FIELD

The present disclosure relates to curable epoxy resin formulations. These formulations include at least one epoxy resin, a boron tri-halide complex accelerator, and a curing system comprising one or more polyether-amido-amine crosslinking agents, the crosslinking agent(s) comprising at least two primary amine groups and at least one tertiary amide group; wherein the crosslinking agent comprises a polyether-amido-amine curing agent comprising both the at least two primary amine groups and the at least one tertiary amide group. The epoxy resin systems are substantially free of anhydride crosslinking agents. Cured epoxies based on these systems and uses for such epoxies are also described. United States patent US 2,909,494 describes, for example, a process for resinifying and curing polyepoxides, and preferably glycidyl polyethers of polyhydric phenols and polyhydric alcohols, which comprises mixing and reacting the polyepoxide with an amine-type curing agent and an activator for the curing agent comprising a Lewis acid such as a metal halide, BF3 of BF3 complex, and preferably a BF3-amine or a BF3-phenol.

### SUMMARY

Briefly, in one aspect, the present disclosure provides a curable composition comprising one or more epoxy resins, a boron tri-halide complex accelerator, and a curing system. The curing system comprises one or more polyether-amido-amine crosslinking agents, wherein the crosslinking agent(s) comprise at least two primary amine groups and at least one tertiary amide group. The composition is substantially free of anhydride groups.

The crosslinking agent comprises a polyether-amido-amine curing agent comprising both at least two primary amine groups and at least one tertiary amide group.

In some embodiments, the curing system comprises a first crosslinking agent comprising at least two primary amine groups and a second crosslinking agent comprising at least one tertiary amide group. In some embodiments, the first crosslinking agent is a polyetheramine curing agent comprising two primary amine groups per molecule.

In some embodiments, the composition comprises 2 to 5 parts be weight, inclusive, of the crosslinking agent(s) per 100 parts by weight of the epoxy resins.

In some embodiments, at least one epoxy resin comprises a diglycidylether of bisphenol A. In some embodiments, at least one epoxy resin comprises an epoxy novolac.

In some embodiments, the composition comprises at least 4 and no greater than 10 parts by weight of the boron tri-halide complex accelerator per 100 parts by weight of the epoxy resins.

In some embodiments, the curable composition comprises
(a) one or more epoxy resins e.g., one or more of a diglycidylether of bisphenol A, an epoxy novolac, or both;
(b) 4 to 10, e.g., 4 to 8, or even 5 to 8 parts by weight of the boron tri-halide complex accelerator per 100 parts by weight of the epoxy resins;
(c) a curing system comprising one or more crosslinking agents, wherein the crosslinking agent(s) comprise at least two primary amine groups at least one tertiary amide group; wherein the composition comprises 2 to 8 parts by weight, e.g., 2 to 5, or even 3 to 5 parts by weight inclusive, of the crosslinking agent(s) per 100 parts by weight of the epoxy resins;
wherein the the ratio of moles of primary amine groups to moles of tertiary amide groups included in the crosslinking agents of the curing system is from 5:1 to 10:1, inclusive, e.g., 6:1 to 8:1, inclusive; and
wherein the composition is substantially free, e.g., free, of anhydrides.

In some embodiments, any of the compositions disclosed herein may further comprise at least one of core-shell rubber particles and a flame retardant.

In some embodiments, the curable composition has a peak exothermic temperature, as measured according to the Exothermic Temperature Procedure, of no greater than 160 °C, e.g., no greater than 150 °C, when cured at 120 °C. In some embodiments, the difference between the peak exothermic temperature and the curing temperature, as measured according to the Exothermic Temperature Procedure, is no greater than 40 °C, e.g., no greater than 30 °C.

In another aspect, the present disclosure provides a cured composition comprising the cured reaction product of any of the curable compositions disclosed herein. In some embodiments, the cured composition has a glass transition temperature of at least 115 °C, e.g., at least 120 °C as measured by the Glass Transition Temperature Procedure.

In yet another aspect, the present disclosure provides uses of the cured compositions of any of the curable compositions disclosed herein including use an electrical insulator, a potting compound, a molding compound, and an impregnating compound.

The details of one or more embodiments of the invention are also set forth in the description below. Other features, objects, and advantages of the invention will be apparent from the description and from the claims.

### BRIEF DESCRIPTION OF THE DRAWINGS

**FIG. 1** illustrates the curing profiles for comparative curable compositions.
**FIG. 2** illustrates the curing profiles for exemplary curable compositions.

### DETAILED DESCRIPTION

Epoxy resins are commonly used as molding compounds in the manufacturing of electrical machines and high voltage equipment for transmission and distribution of electrical power, as well as for potting and impregnation compounds. Applications include e.g. rotating machines, transformers, gas insulated switchgears and generator circuit breakers. The resins are also used in the automotive market as insulation, for example in car ignition coils.

Desirable characteristics of these epoxy resins can include high glass transition temperature (Tg), high temperature stability, and good mechanical properties, e.g., crack resistance. Often, these resins must withstand voltages higher than 10 kV and maintain their properties for more than 25 years.

Anhydride-based hardeners have been used in epoxy systems alone or in combination with amine curing agents. EP 2 414 425 B1 describes a curable composition comprising at least one epoxy resin and an epoxide hardener system comprising an anhydride, a first amine, and a second amine. EP 1 838 776 B1 describes an epoxy composition comprising at least one liquid epoxy resin; at least one liquid, cyclic anhydride hardener; and at least one amine cure catalyst having no amine hydrogens.

Anhydride hardeners can provide high glass transition temperatures and good mechanical properties of the cured resin. Anhydride hardeners also develop low exothermic heat during cure, which is of special importance for large volume insulating parts, potting compounds, and molding compounds. However, as anhydrides receive more regulatory attention, alternatives to their use may be desirable. Thus, there is a need for anhydride-free epoxy resin systems that provide low exothermic heat generation during cure while retaining the desired balance of features suitable for the application such as temperature stability, high glass transition temperature, good crack resistance, high voltage resistance, long use life, and pre-cure stability. Ideally, the composition would be substantially free of Substances of Very High Concern "SVHC" and those being considered for inclusion on regulated lists of chemicals such as those on the REACH candidate list.

The present disclosure describes epoxy resin formulations that are substantially free of anhydride hardeners yet still provide low exothermic heat upon cure. Various formulations offer good thermal and mechanical properties. In some embodiments, these benefits are achieved with little or no reduction in cure (or gel) time, or even an increase in cure (or gel) time. In some embodiments, the formulations are beneficial for use as potting or molding compounds, particularly in medium and high voltage applications. Some formulations may also be suitable for use as electrical insulators and impregnating resins. The present disclosure also describes various optional modifications to the base formulation. Such modifications may be used alone or in combination to achieve desired results. Exemplary modifications include the addition of flame retardants and fillers such as core-shell rubber particles.

The formulations of the present disclosure include at least one epoxy resin and a curing system. The curing system includes at least one polyether-amido-amine crosslinking agent having at least two primary amine groups. The curing system also includes a crosslinking agent having at least one tertiary amide group. The tertiary amide groups may be present on the same crosslinking agent as the primary amines, or may be present on a separate crosslinking agent. The formulation also includes at least one boron tri-halide complex accelerator.

Due to trace amounts present in commercially available raw materials, reaction byproducts, contaminants, and other causes, it may be difficult or impossible to ensure a composition is completely free of anhydride groups. However, the formulations of the present disclosure are substantially-free of anhydride groups, preferably free of anhydride groups. When present as an intended curative, typical formulations include 0.5 to 0.9 equivalents of anhydride to equivalents of epoxy. In contrast, in some embodiments, the compositions of the present disclosure contain no greater than 0.05 equivalents of anhydride groups per equivalent of epoxy groups. In some embodiments, the compositions contain no greater than 0.01 equivalents, or even no greater than 0.005 equivalents of anhydride groups per equivalent of epoxy groups.

Generally, epoxy resins are low molecular weight, oligomeric or polymeric organic compounds having one or more oxirane ring polymerizable by a ring opening reaction. The epoxy-functionalities allow the resin to undertake cross-linking reactions. Such materials, broadly called epoxides, can be aliphatic, cycloaliphatic or aromatic. Useful materials generally have at least two polymerizable epoxy groups per molecule and, more preferably, from two to four polymerizable epoxy groups per molecule. Typically, the epoxy resins may have an average epoxy-functionality of at least 1, e.g., greater than one, e.g., at least 2. In some embodiments, the average epoxy-functionality is from 1 to 4, e.g., 2 to 4. As used herein, all ranges include their end points.

In some embodiments, the epoxy resins may be selected from alkylene oxides, alkenyl oxides, glycidyl esters, glycidyl ethers, epoxy novolacs, copolymers of acrylic acid esters of glycidol and copolymerizable vinyl compounds, polyurethane polyepoxides, and mixtures thereof. In some embodiments, the epoxy resins contain moieties of the glycidyl, diglycidyl or polyglycidyl ether type. In some embodiments, the epoxy resins include those containing or consisting of glycidyl ethers or polyglycidyl ethers of monohydric, dihydric or polyhydric phenols, including but not limited to bisphenol A, and bisphenol F, including polymers comprising repeating units of these phenols.

Exemplary epoxy resins also include epoxy novolacs. Epoxy novolacs are the reaction product of an epoxy group- introducing agent, such as for example epichlorohydrin, with a condensation product of a mono- di- or polyhydric phenol (which may be alkylsubstituted (e.g. cresol) or non-substituted) and an aldehyde, such as for example, formaldehyde. Typical epoxy novolacs are polymers containing glycidyl ether groups and further comprising repeating units derived from bisphenol F or another reaction product of a phenol with an aldehyde. The phenol may be monohydric, dihydric or trihyidric and may be non-substituted or alkyl substituted.

Instead of, or in addition to, aromatic epoxy resins their fully or partially hydrogenated derivatives (i.e. the corresponding cycloaliphatic compounds) may be used.

Generally, the epoxy resins may be liquid at room temperature (20 °C) or solid. In some embodiments, the epoxy resins may have a viscosity of at least 400 mPa•s at 20° C, e.g., at least 8,000 mPa•s at 20 °C. In some embodiments, the epoxy resins may have a viscosity of up to 40,000 mPa•s at 50 °C, e.g., up to 5,000 mPa•s at 50°C.

Examples of commercially available epoxy resins include diglycidylethers of bisphenol A (e.g., those available under the trade designation EPON 828, EPON 830 or EPON 1001 from Hexion Speciality Chemicals GmbH, Rosbach, Germany, or under the trade designation D.E.R-331 or D.E.R-332 from Dow Chemical Co.,); diglycidyl ethers of bisphenol F (e.g. EPICLON 830 available from Dainippon Ink and Chemicals, Inc. or D.E.R.-354 from Dow Chemical Co., Schwalbach/Ts., Germany); silicone resins containing diglycidyl epoxy functionalities; and flame retardant epoxy resins (e.g. DER 580, a brominated bisphenol type epoxy resin available from Dow Chemical Co.). Other epoxy resins based on bisphenols are commercially available under the trade designations EPIKOTE (Hexion Speciality Chemicals, Rosbach, Germany), or EPILOX (Leuna Epilox GmbH, Leuna, Germany). Epoxy novolacs are available under the trade designation D.E.N. from Dow Chemical Co, Schwalbach/Ts., Germany, such as for example D.E.N 425, 431, 435, and 438.

The epoxy resin formulations further comprise a curing system comprising one or more crosslinking agents. As used herein, crosslinking agent refers to a compound that reacts with the oxirane ring of the epoxide to cause cross-linking. Epoxide crosslinking agents are also known in the art as curatives, hardeners, accelerators, and catalysts.

As used herein, the terms "curing agent" and "hardener" refer to crosslinking agents that co-react with the epoxy resins and form part of the crosslinked network. The terms "accelerating agent" and "catalyst" refer to crosslinking agents that are also able to cause cross-linking of epoxides but that do not co-cure and are not part of the final cross-linked network.

The curing system of the present disclosure includes at least one crosslinking agent comprising at least two primary amine groups. Generally, compounds with two or more primary amine groups are capable of co-reacting with the epoxy resin(s) and become integrated into the crosslinked network. Thus, they may be referred to as curing agents or hardeners.

The curing system also includes at least one polyether-amido-amine crosslinking agent having at least one tertiary amide group. Generally, materials that include only tertiary amide groups do not co-react and may be referred to as accelerators or catalysts.

The primary amine groups and tertiary amide groups may be present on the same crosslinking agent, or may be present on different crosslinking agents. Generally, the crosslinking agents may be aliphatic or aromatic, linear or branched, and cyclic or acyclic.

In some embodiments, at least one crosslinking agent may be a linear or branched aliphatic amine, e.g., a linear or branched aliphatic multi-amine. In some embodiments, the aliphatic amine comprises at least two primary amines, i.e., the aliphatic amine is a curing agent.

In some embodiments, at least one crosslinking agent may be a linear or branched polyether amine. Such materials have a backbone comprising ethylene oxide repeating units, propylene oxide repeating units, or both. In some embodiments, such polyether amines are linear and comprise two terminal amines. In some embodiments, both terminal amines are primary amines. Commercially available di-primary amine polyetheramines include those available from Hunstman Corporation under the tradename JEFFAMINE such as the D-series (e.g., D-23, -400, -2000, and - 4000) and the ED-series (e.g., HK-511, ED-600, -900, and 2003).

In some embodiments, such polyether amines are branched and comprise three terminal amines. In some embodiments, each terminal amine is a primary amines. Commercially available tri-primary amine polyetheramines include those available from Hunstman Corporation under the tradename JEFFAMINE such as the T-series (e.g., T-403, -3000, and -5000).

In some embodiments, at least one crosslinking agent comprises both primary amine groups and tertiary amide groups. In some embodiments, such crosslinking agents may include polyethylene oxide repeating units, polypropylene oxide repeating units, or both. In some embodiments, such compounds include at least two primary amines. Suitable crosslinking agents comprising both primary amine groups and tertiary amide groups include those described in patent publication EP2495271A1 (Polyether Hybrid Epoxy Curatives).

The curable epoxy resin formulations also include a boron tri-halide complex accelerator in addition to the amine- and amide-based crosslinking agents. In some embodiments, such accelerators can contribute to increased glass transition temperatures in the cured epoxy system. Exemplary accelerators include e.g., boron trifloride or trichloride complexes. Specific examples include, for example, trichloro(N,N-dimethyloctyl amine)boron.

As used herein, these accelerators are considered distinct from the curing system, which only includes the amine- and amide-based crosslinking agents. Although some boron tri-halide complexes comprise a tertiary amine, they are latent accelerators. For example, trichloro(N,N-dimethyloctyl amine)boron requires temperatures above about 115 °C to activate. The boron complex is a strong Lewis acid affecting cure. While the associated amine group is believed to exist as a tertiary amine upon activation, it is an aliphatic monoamine and therefore does not significantly contribute to crosslinking. Therefore, the boron tri-halide complex is considered as an independent component distinct from the crosslinking agents included in the curing system.

In some embodiments, the compositions of the present disclosure comprise at least 90 percent by weight, e.g., at least 95 wt.% of one or more epoxy resins based on the total weight of the epoxy resins and curing system. In some embodiments, the epoxy resin formulations comprise no greater than 98 percent by weight, e.g., no greater than 97 wt.%, of one or more epoxy resins based on the total weight of the epoxy resins and curing system. For example, in some embodiments, the formulations comprise from 90 to 98 wt.%, e.g., from 95 to 97 wt.% of one or more epoxy resins based on the total weight of the epoxy resins and curing system.

In some embodiments, the compositions comprise at least 2, e.g., at least 3 parts by weight of the total primary amine- and tertiary amide-containing crosslinking agents per 100 parts by weight of the epoxy resins. In some embodiments, the compositions comprise no greater than 8, e.g., no greater than 5 parts by weight of the total primary amine- and tertiary amide-containing crosslinking agents per 100 parts by weight of the epoxy resins. For example, in some embodiments, the compositions contain 2 to 8 parts by weight, e.g., 2 to 5, or even 3 to 5 parts by weight inclusive, of the crosslinking agent(s) per 100 parts by weight of the epoxy resins.

In some embodiments, the ratio of moles of primary amine groups to moles of tertiary amide groups included in the crosslinking agents of the curing system is from 5:1 to 15:1, inclusive, e.g., 5:1 to 10:1, inclusive. In some embodiments, the ratio of moles of primary amine groups to moles of tertiary amide groups included in the crosslinking agents of the curing system is from 6:1 to 8:1, inclusive, e.g., about 7:1.

In some embodiments, the composition comprises at least 4, e.g., at least 5 parts by weight of the boron tri-halide complex accelerator per 100 parts by weight of the epoxy resins. In some embodiments, the composition comprises no greater than 10, e.g., no greater than 8 parts by weight of the boron tri-halide complex accelerator per 100 parts by weight of the epoxy resins. For example, in some embodiments, the composition comprises at 4 to 10, e.g., 4 to 8, or even 5 to 8 parts by weight of the boron tri-halide complex accelerator per 100 parts by weight of the epoxy resins.

Generally, the compositions of the present disclosure may include other additives and materials known for use with epoxy resin systems. In some embodiments, the compositions may include one or more of fillers, tougheners, flexibilizers, and flame retardants. Exemplary materials include inorganic fillers such as silica and aluminium oxide, and rubber particles such as core-shell rubber particles. Exemplary flame retardants include both halogen and halogen free flame retardants, including phosphorous-based flame retardants.

Examples. The materials used in the following examples are summarized in Table 1.

**Table 1: Summary of materials used in the preparation of the examples.**

| I.D. | Description | Trade Name and Source |
|---|---|---|
| Bis-A | Di-functional bisphenol A/epichlorohydrin derived liquid epoxy resin | EPON Resin 828, Hexion, Inc. |
| PE-A-A | Polyether-amido-amine curing agent with both primary amine and tertiary amide groups | Example CA-1 of EP2495271A1 |
| Pr_Amine | Polyetheramine curing agent with two primary amines per molecule | JEFFAMINE D-230, Hunstman Corporation |
| Tert-Amine | Tris-(2,4,6-dimethlyaminomethylphenol) accelerator with three tertiary amines per molecule | ANCAMINE K54, Air Products and Chemicals, Inc. |
| BTC | Trichloro(N,N-dimethyloctlyamine) boron complex accelerator | OMICURE BC 120, CVC Thermoset Specialties |
| - | 37 wt.% of 200 nm polybutadiene core-shell rubber particles in bis-phenol A liquid epoxy resin | KANE ACE MX-257, Kaneka |
| - | Aluminum oxide filler | Quarz-werke |

The polyether-amido-amine (PE-A-A) curing agent was prepared according to the methods described for Example CA-1 of EP 2495271 A1. The reaction temperature was 130 °C resulting in the formation of 68-75% of the "secondary amide" structure shown as Formula I, and 25-32% of the "tertiary amide" structure shown as Formula II. This results in a molar ratio of primary amines to tertiary amides of about 7:1.

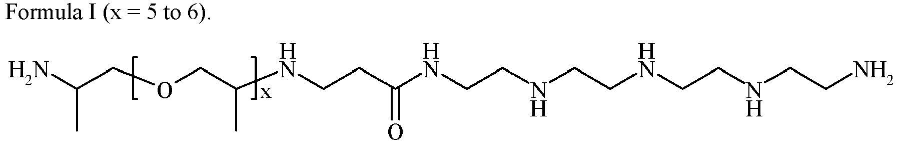

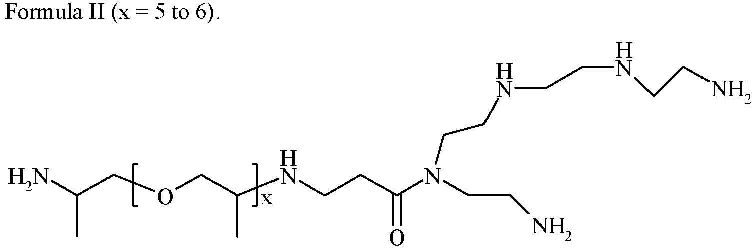

The commercially-soured tetraethylene pentamine (TEPA) used in the reaction sequence to form the polyether-amido-amine curing agent is reportedly a mixture containing linear, branched, and cyclic molecules. The structures of the major TEPA components are: Linear TEPA (resulting in the reaction products shown above) as well as aminoethyltris-aminoethylamine, aminoethyldiaminoethylpiperazine, and aminoethylpiper-azinoethylethylenediamine. The presence and subsequent reaction of these additional constituents are not believed to have a significant impact on the final ratio of primary amines to tertiary amides.

The epoxy resin formulations were prepared by mixing the components using a propeller mixer at 1000 rpm at ambient conditions. First, 75 parts by weight (pbw) of EPON 828 epoxy resin were mixed with 25 pbw of the KANE ACE MX-257 core-shell rubber particles (37 wt.% in epoxy resin) resulting in about 91 pbw of epoxy resins and 9 pbw of core-shell rubber particles. Next, 150 pbw aluminum oxide filler was added, followed by various amounts of OMICURE BC-120 boron trichloride complex accelerator. The respective crosslinking agent(s) were added last.

Exothermic Temperature Procedure. To evaluate the amount of exothermic heat generated during cure, approximately 200 g of the mixed formulation were poured into an aluminum pan (diameter about 8 cm, height about 2.5 cm). A thermocouple was mounted and fixed in the center of the pan and the temperature profile was recorded during the curing reaction in the oven using a Yokogawa MV1000 temperature recorder. The results were analyzed to determine the peak exothermic temperature (Tp) and the difference between Tp and the oven temperature (DT). The time for reaching the peak exothermic temperature is considered as the curing time.

Glass Transition Temperature Procedure. Differential scanning calorimetry (DSC) measurements were performed using a Netzsch DSC 200. Two heating and cooling cycles were recorded with a speed of 40 K per minute and the glass transition temperature (Tg) of the cured material was evaluated from the inflection (turning) point in the second heating curve.

Gel Point Procedure. Rheological measurements were performed on a strain-controlled shear rheometer (ARES G2 from TA Instruments) with force convection oven using 25 mm parallel plate geometry with a gap of about 1 mm. Oscillatory shear measurements were carried out at a constant frequency of 1 Hz with auto strain adjustment in a range from 0.05 to 20 %. The viscosity and G-moduli were monitored during a temperature ramp experiment with a heating rate of 3 K/min in a temperature range from 30 to 120 °C and a subsequent time sweep experiment at constant temperature of 120 °C. The gel point was determined at the crossover point of G', G" (tan delta = 1).

Comparative Examples CE-1, CE-2, and CE-3 were prepared using only the boron complex accelerator. The compositions and results are summarized in Table 2. The amounts of accelerators and curative are reported as parts per 100 parts by weight of the epoxy resin (phr).

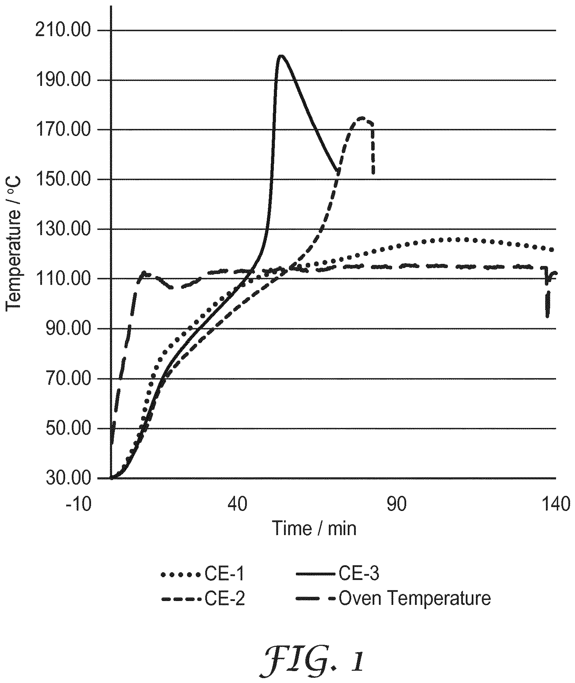

The exothermic temperature profiles for Comparative Examples CE-1, -2, and -3 are shown in **FIG. 1****,** along with the oven temperature profile. As the amount of accelerator was increased, the cure time was reduced and the exothermic peak temperature (Tp) also increased significantly. The exothermic peak temperatures for samples CE-2 (174 °C) and CE-3 (200 °C) would be unacceptable for many applications where thick samples of the epoxy must be cured in the area of heat sensitive materials. In addition, the reduction in cure time may create handling problems in some applications, e.g., with high volume parts. However, high glass transition temperature (Tg) is desirable, and often required. As the amount of boron trichloride accelerator is increased, the resulting glass transition temperature is increased. Generally, a Tg of at least 110 °C, at least 130 °C, or even at least 140 °C is desirable. Therefore, despite the drawbacks of higher amounts of the accelerator, a minimum amount may be required to achieve the desired Tg.

**Table 2: Formulations for Comparative Examples 1-3 and Examples 1-3 (amounts in phr).**

| Example | BTC Accelerator | PE-A-A Curative | Tp °C | DT °C | Cure Time (minutes) | Tg °C |
|---|---|---|---|---|---|---|
| CE-1 | 3.3 | -- | 125 | 5 | 115 | |
| CE-2 | 5.5 | -- | 175 | 55 | 80 | 149 |
| CE-3 | 8.8 | -- | 200 | 80 | 55 | |
| EX-1 | 5.5 | 1.1 | 165 | 45 | 85 | |
| EX-2 | 5.5 | 3.3 | 145 | 25 | 105 | 151 |
| EX-3 | 5.5 | 11 | No peak | | | |

Examples EX-1, EX-2, and EX-3 were prepared using the polyether-amido-amine crosslinking agent, which has both primary amine and tertiary amide groups. Similar to CE-2, each example contained 5.5 phr of the boron trichloride accelerator. This selection reflects the desire to achieve a minimum desirable Tg in the cured product. The formulations are summarized in Table 2.

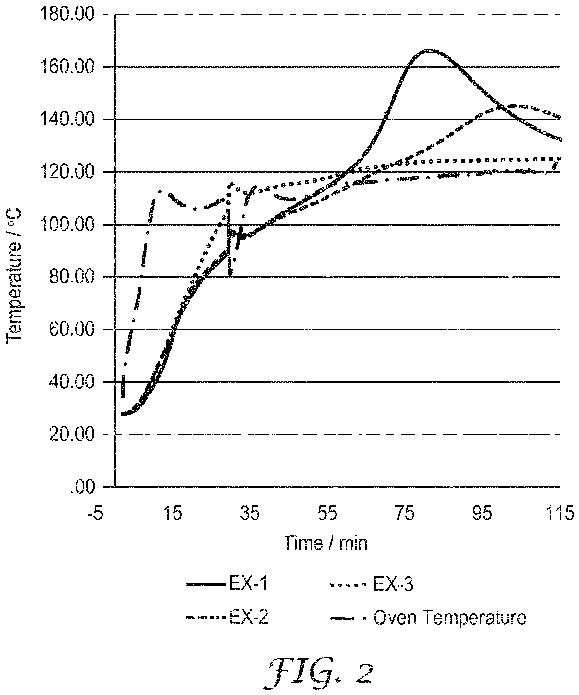

The exothermic temperature profiles for Examples EX-1, -2, and -3, are shown in FIG. 2, along with the oven temperature profile. The polyether-amido-amine crosslinking agent is effective at room temperature and includes both primary amine and tertiary amide groups. At 1.1 phr of the crosslinking agent (EX-1), the exothermic temperature profile was similar to CE-2. When the amount of crosslinking agent was increased to 3 phr (EX-2), a surprising result was obtained. Rather than decreasing the curing time and increasing the exothermic peak temperature, the addition of the crosslinking agent increased the curing time and reduced the exothermic peak temperature. This result was obtained while maintaining a high glass transition temperature. When the amount of the crosslinking agent was increased to 11 phr, no peak was detected at an oven temperature of 120 °C (EX-3). These results are summarized in Table 2.

Primary amines and tertiary amines have been used alone and in combination as crosslinking agents for epoxy resin systems. Comparative Examples CE-4 through CE-9 were prepared to determine the effects of adding only a primary amine or only a tertiary amine crosslinking agent to compositions similar to CE-2 with 5.5 phr of the boron trichloride accelerator. The results are summarized in Table 3.

**Table 3: Comparative Examples CE-4 to CE-9 (all amounts in phr epoxy).**

| Example | Boron trichloride | Primary Amine | Tertiary Amine | Tp °C | DT °C | Cure Time (minutes) |
|---|---|---|---|---|---|---|
| CE-4 | 5.5 | -- | 0.6 | 180 | 60 | 75 |
| CE-5 | 5.5 | -- | 2.2 | 160 | 40 | 70 |
| CE-6 | 5.5 | -- | 5.5 | 140 | 20 | 40 |
| CE-7 | 5.5 | 1.1 | -- | 165 | 45 | 80 |
| CE-8 | 5.5 | 3.3 | -- | 150 | 30 | 105 |
| CE-9 | 5.5 | 11 | -- | 135 | 15 | 45 |

As expected, with increasing additions of the tertiary amine, the cure time was reduced. With increasing amounts of the primary amine, the cure time first increased, then decreased. Although both crosslinking agents resulted in lower exotherms, the reduction in cure time can be unacceptable for many applications requiring a long pot life. In addition, the Tg of sample CE-8 was only 87 °C. Thus, although this sample may have an acceptable cure time and exothermic peak, it is unsuitable for many applications.

Example CE-10 was prepared to determine if the desirable behavior of Example EX-2 could be achieved using a combination of the primary amine and the tertiary amine crosslinking agents of Comparative Examples CE-4 to CE-9. Again, the CE-2 sample was used as the baseline, with all examples containing 5.5 phr of the boron trichloride accelerator. The amount and ratio of primary and tertiary amines in EX-4 was chosen to match with the molar ratio of primary amines and tertiary amine groups in the polyether-amido-amine curative, which was about 2:1.

The Gel Point Procedure was used to monitor the cure of the epoxy. The results are summarized in Table 4, and compared to the results obtained with EX-2, CE-2, CE-5, and CE-8.

**Table 4: Examples EX-4 to EX-6.**

| Example | Boron trichloride | Primary Amine | Tertiary Amine | PE-A-A Curative | Tp °C | DT °C | Gel Time (minutes) |
|---|---|---|---|---|---|---|---|
| CE-2 | 5.5 | -- | -- | -- | 175 | 55 | 50 |
| EX-2 | 5.5 | -- | -- | 3.3 | 145 | 25 | 60 |
| CE-5 | 5.5 | -- | 2.2 | -- | 155 | 35 | 40 |
| CE-8 | 5.5 | 3.3 | -- | -- | 150 | 25 | 80 |
| CE-10 | 5.5 | 3.3 | 1.1 | -- | 160 | 40 | 60 |

Comparing EX-2 and CE-10, similar gel time results were obtained which indicates that some aspects of the positive behavior of EX-2 can also be achieved by combining primary amine and tertiary amine groups. However, the Tg of CE-10 was only 116 °C compared to 151 °C for EX-2. Also, the peak temperature (Tp) of CE-10 was 15 °C higher when using the primary amines and tertiary amines, as compared EX-2, which combined primary amines and a tertiary amide.

The results of Examples EX-1 to EX-3 indicate an optimum concentration of the polyether-amine-amido crosslinking agent. Examples EX-4 through EX-8 were prepared using various amounts of this crosslinking agent (2.2 to 6.6 phr). The compositions and results are summarized in Table 5. All samples contained 5.5 phr of the boron trichloride accelerator.

**Table 5: Examples EX-4 to EX-8, with results from EX-1 and EX-2.**

| Example | EX-1 | EX-4 | EX-2 | EX-5 | EX-6 | EX-7 | EX-8 |
|---|---|---|---|---|---|---|---|
| Polyether-amido-amine curing agent (phr) | 1.1 | 2.2 | 3.3 | 3.3 | 4.4 | 5.5 | 6.6 |
| Tp°C | 165 | 150 | 145 | 140 | 130 | No peak | No peak |
| DT °C | 45 | 30 | 25 | 20 | 10 | | |
| Cure time (minutes) | 85 | 90 | 105 | 110 | 100 | | |
| Tg°C | | 145 | 151 | 138 | 136 | 133 | 118 |

## Claims

1. A curable composition comprising one or more epoxy resins, a boron tri-halide complex accelerator, and a curing system comprising one or more polyether-amido-amine crosslinking agents, the crosslinking agent(s) comprising at least two primary amine groups and at least one tertiary amide group; wherein the composition is substantially free of anhydride groups, wherein the crosslinking agent comprises a polyether-amido-amine curing agent comprising both the at least two primary amine groups and the at least one tertiary amide group.

2. Curable composition according to any of the preceding claims, wherein the composition comprises at least 4 and no greater than 10 parts by weight of the boron tri-halide complex accelerator per 100 parts by weight of the epoxy resins.

3. Curable composition according to any one of the preceding claims, wherein the ratio of moles of primary amine groups to moles of tertiary amide groups is from 5:1 to 15:1, inclusive.

4. The curable composition according to any one of the preceding claims, wherein the composition comprises 2 to 5 parts by weight, inclusive, of the crosslinking agent(s) per 100 parts by weight of the epoxy resins.

5. The curable composition according to any one of the preceding claims, wherein at least one epoxy resin comprises at least one of a diglycidylether of bisphenol A and an epoxy novolac.

6. The curable composition according to any one of the preceding claims, wherein the composition further comprises at least one of core-shell rubber particles and a flame retardant.

7. The curable composition according to any one of the preceding claims, wherein the curable composition has a peak exothermic temperature, as measured according to the Exothermic Temperature Procedure, of no greater than 150 °C when cured at 120 °C.

8. The curable composition according to any one of the preceding claims, wherein difference between the peak exothermic temperature and the curing temperature, as measured according to the Exothermic Temperature Procedure, is no greater than 30 °C.

9. A cured composition comprising the cured reaction product of the curable composition according to any one of the preceding claims.

10. The cured composition of claim 9, wherein the cured composition has a glass transition temperature of at least 120 °C as measured by the Glass Transition Temperature Procedure.

11. Use of the cured composition of claim 9 or 10 as an electrical insulator.

12. Use of the cured composition of claim 9 or 10 as a potting compound.

## Patentansprüche

1. Eine härtbare Zusammensetzung, umfassend ein oder mehrere Epoxidharze, einen Bortrihalogenid-Komplexbeschleuniger und ein Härtungssystem, umfassend ein oder mehrere Polyetheramidoamin-Vernetzungsmittel, wobei das/die Vernetzungsmittel mindestens zwei primäre Amingruppen und mindestens eine tertiäre Amidgruppe umfassen; wobei die Zusammensetzung im Wesentlichen frei von Anhydridgruppen ist, wobei das Vernetzungsmittel ein Polyetheramidoamin-Härtungsmittel umfasst, das sowohl die mindestens zwei primären Amingruppen als auch die mindestens eine tertiäre Amidgruppe umfasst.

2. Härtbare Zusammensetzung nach einem der vorstehenden Ansprüche, wobei die Zusammensetzung zu mindestens 4 und nicht mehr als 10 Gewichtsteilen den Bortrihalogenid-Komplexbeschleuniger pro 100 Gewichtsteile der Epoxidharze umfasst.

3. Härtbare Zusammensetzung nach einem der vorstehenden Ansprüche, wobei das Verhältnis von Molen primärer Amingruppen zu Molen tertiärer Amidgruppen 5:1 bis einschließlich 15:1 beträgt.

4. Die härtbare Zusammensetzung nach einem der vorstehenden Ansprüche, wobei die Zusammensetzung 2 bis einschließlich 5 Gewichtsteile des/der Vernetzungsmittel(s) pro 100 Gewichtsteile der Epoxidharze umfasst.

5. Die härtbare Zusammensetzung nach einem der vorstehenden Ansprüche, wobei mindestens ein Epoxidharz mindestens eines von einem Diglycidylether von Bisphenol A und einem Epoxidnovolak umfasst.

6. Die härtbare Zusammensetzung nach einem der vorstehenden Ansprüche, wobei die Zusammensetzung ferner mindestens eines von Kern-Hülle-Kautschukteilchen und einem Flammschutzmittel umfasst.

7. Die härtbare Zusammensetzung nach einem der vorstehenden Ansprüche, wobei die härtbare Zusammensetzung eine exotherme Spitzentemperatur, wie gemäß dem exothermen Temperaturverfahren gemessen, von nicht mehr als 150 °C aufweist, wenn sie bei 120 °C gehärtet wird.

8. Die härtbare Zusammensetzung nach einem der vorstehenden Ansprüche, wobei die Differenz zwischen der exothermen Spitzentemperatur und der Härtungstemperatur, wie gemäß dem exothermen Temperaturverfahren gemessen, nicht größer als 30 °C ist.

9. Eine gehärtete Zusammensetzung, umfassend das gehärtete Reaktionsprodukt der härtbaren Zusammensetzung nach einem der vorstehenden Ansprüche.

10. Die gehärtete Zusammensetzung nach Anspruch 9, wobei die gehärtete Zusammensetzung eine Glasübergangstemperatur von mindestens 120 °C, wie durch das Glasübergangstemperaturverfahren gemessen, aufweist.

11. Verwendung der gehärteten Zusammensetzung nach Anspruch 9 oder 10 als elektrischer Isolator.

12. Verwendung der gehärteten Zusammensetzung nach Anspruch 9 oder 10 als Vergussmasse.

## Revendications

1. Composition durcissable comprenant une ou plusieurs résines époxy, un accélérateur complexe tri-halogénure de bore, et un système de durcissement comprenant un ou plusieurs agents de réticulation polyéther-amido-amine, le(s) agent(s) de réticulation comprenant au moins deux groupes aminé primaire et au moins un groupe amide tertiaire ; dans laquelle la composition est essentiellement dépourvue de groupes anhydride, dans laquelle l'agent de réticulation comprend un agent de durcissement polyéther-amido-amine comprenant à la fois les au moins deux groupes aminé primaire et l'au moins un groupe amide tertiaire.

2. Composition durcissable selon l'une quelconque des revendications précédentes, dans laquelle la composition comprend au moins 4 et pas plus de 10 parties en poids de l'accélérateur complexe tri-halogénure de bore pour 100 parties en poids des résines époxy.

3. Composition durcissable selon l'une quelconque des revendications précédentes, dans laquelle le rapport des moles de groupes aminé primaire aux moles de groupe amide tertiaire va de 5:1 à 15:1, inclus.

4. Composition durcissable selon l'une quelconque des revendications précédentes, dans laquelle la composition comprend 2 à 5 parties en poids, inclus, du ou des agent(s) de réticulation pour 100 parties en poids des résines époxy.

5. Composition durcissable selon l'une quelconque des revendications précédentes, dans laquelle au moins une résine époxy comprend au moins l'un parmi un éther diglycidylique de bisphénol A et un époxy novolac.

6. Composition durcissable selon l'une quelconque des revendications précédentes, dans laquelle la composition comprend en outre au moins l'un parmi des particules de caoutchouc à noyau-enveloppe et un ignifugeant.

7. Composition durcissable selon l'une quelconque des revendications précédentes, dans laquelle la composition durcissable a une température exothermique de pic, telle que mesurée selon la procédure de température exothermique, n'excédant pas 150 °C lors d'un durcissement à 120 °C.

8. Composition durcissable selon l'une quelconque des revendications précédentes, dans laquelle une différence entre la température exothermique de pic et la température de durcissement, telle que mesurée selon la procédure de température exothermique, n'est pas supérieure à 30 °C.

9. Composition durcie comprenant le produit de réaction durci de la composition durcissable selon l'une quelconque des revendications précédentes.

10. Composition durcie selon la revendication 9, dans laquelle la composition durcie a une température de transition vitreuse d'au moins 120 °C telle que mesurée par la procédure de température de transition vitreuse.

11. Utilisation de la composition durcie de la revendication 9 ou 10 en tant qu'isolant électrique.

12. Utilisation de la composition durcie de la revendication 9 ou 10 en tant que composé d'encapsulation.
